# EUROPEAN PATENT APPLICATION

(11) **EP 1 434 462 A2**
(43) Date of publication of application: **30.06.2004**
(21) Application number: 03029694.1
(22) Date of filing: 23.12.2003
(51) Int. Cl.: H04R 1/28, B60R 11/02

(54) **Vibration propagation suppressing structure**

(30) Priority: 27.12.2002 JP 2002380449
(71) Applicant: Pioneer Corporation, Meguro-ku, Tokyo (JP)
(72) Inventor: Yoshimi, Toshikazu, Kawagoe-shi Saitama (JP); Yoshida, Kensaku, Kawagoe-shi Saitama (JP)
(74) Representative: Reinhard - Skuhra - Weise & Partner GbR

(57) **Abstract**

A cutout portion is formed in the vicinity of a speaker (vibration generating source) on an attaching plate. The cutout portion is arranged in an arc shape to be concentric around the speaker. Preferably, the cutout portion is filled with a filler, and a fold-back portion folded to the rearside is given at an edge of the cutout portion.

## Description

The present disclosure relates to the subject matter contained in Japanese Patent Application No. 2002-380449 filed on December 27, 2002, which is incorporated herein by reference in its entirety.

### BACKGROUND OF THE INVENTION

### Field of the Invention

The present invention relates to a vibration propagation suppressing structure for suppressing propagation of the vibration which is generated from a vibration generating source attached to an attaching plate, such for suppressing the vibration which is generated from a speaker for a vehicle.

### Description of the Related Art

Conventionally, a speaker for a vehicle is directly attached to a part of a vehicle body such as a door as disclosed in JP-A-8-84389 (pages 3-4; and Fig. 2). The conventional attaching structure is shown in Fig. 1.

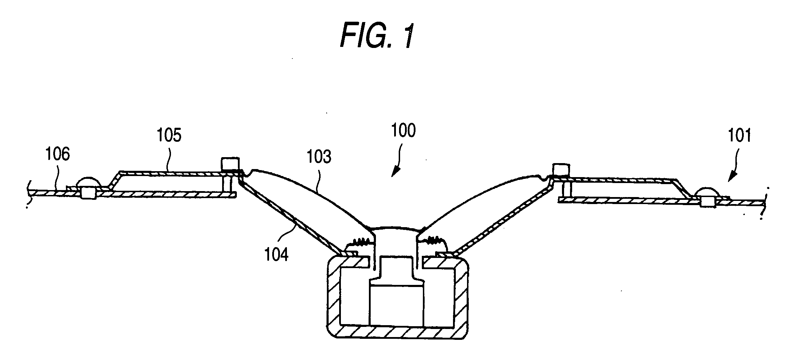

Fig. 1 is a sectional view of the structure in which a speaker 100 is attached to a vehicle door 101. As seen from Fig. 1, a vibrating plate 103 of the speaker 100 is elastically supported by a frame 104 though an edge or damper. The frame 104 is made of a material such as metal and has relatively high rigidity. A plurality of extending portions which extend outwardly are formed integrally to the frame 104. A sound insulator is arranged between the extending portions 105 and a wall panel (attaching plate) 106 within the vehicle. The ends of the extending portions are directly attached to the wall panel (attaching plate) 106 of a vehicle door within the vehicle.

However, the structure in which the speaker 100 is directly attached to the wall panel (attaching plate) 106 of the vehicle door within the vehicle has the following drawback. The vibration when the speaker 100 is operated propagates to also the wall panel (attaching plate) 106 within the vehicle as reaction from the vibrating plate 103. Therefore, the entire wall panel (attaching plate) 106 within the vehicle and the members mounted thereon (e.g. window opening motor, door back line assay, and inner decorating panel.) suffer from the propagated vibration. As a result, unusual sound such as rattle noize and distorted sound due to the vibration of the wall panel (attaching plate) 106 within the vehicle may be generated.

Such an unusual sound or a distorted sound attenuates the quality of the sound signal such as music which is reproduced from the speaker 100 within a passenger room, thereby deteriorating the sound quality. The inner decorating panel also vibrates within the passenger room. Therefore, the vibration also propagates to a member, such as an armrest and a pocket, attached to the inner decorating panel. The vibration may give uncomfortableness to a passenger of the vehicle.

### SUMMARY OF THE INVENTION

It is therefore an object of the invention to provide a vibration propagation suppressing structure that prevents occurrence of a distortion sound due to a vibration of an attaching plate in order to provide comfortableness to a passenger.

In order to achieve the object, according to one aspect of the invention, there is/provided a vibration propagation suppressing structure including: an attaching plate; and a vibration generating source attached to the attaching plate, wherein the attaching plate comprises a cutout portion formed in a vicinity of the vibration source.

### BRIEF DESCRIPTION OF THE DRAWINGS

The above objects and advantages of the present invention will become more apparent by describing in detail of a preferred exemplary embodiment thereof with reference to the accompanying drawings, wherein:
Fig. 1 is a sectional view of a conventional speaker attaching structure;
Fig. 2 is a front view of a vibration propagation suppressing structure according to an embodiment of the present invention;
Fig. 3 is a sectional view of a speaker attaching structure shown in Fig. 2;
Fig. 4 is a front view of a first exemplary shape of a cutout portion;
Fig. 5 is a front view of a second exemplary shape of a cutout portion;
Fig. 6 is a front view of a third exemplary shape of a cutout portion;
Fig. 7 is a front view of a fourth exemplary shape of a cutout portion;
Fig. 8 is a sectional view of the cutout portion;
Fig. 9 is a block diagram showing the arrangement of an apparatus for measuring vibration; and
Figs. 10A through 10E are graphs showing the measurement results of vibration.

### DETAILED DESCRIPTION OF THE PREFERRED EMBODIMENTS

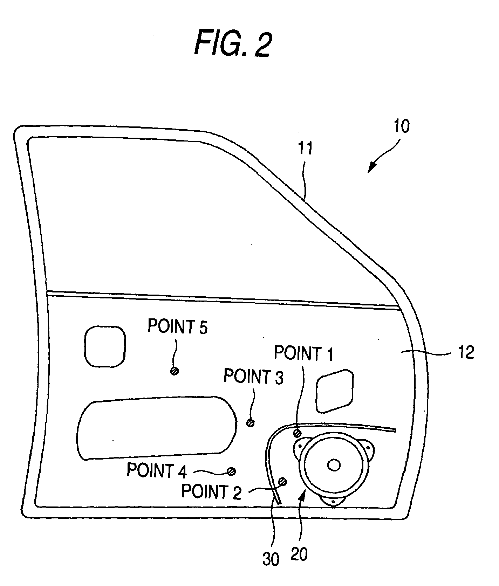

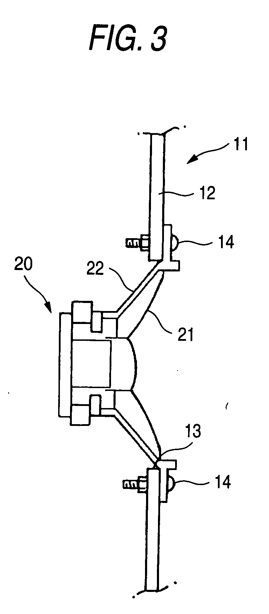

Now referring to the drawings, an explanation will be given of an embodiment of the present invention. In the embodiment, the explanation will be given of a vibration propagation suppressing structure in which a speaker for a vehicle is attached to a wall panel of a vehicle door. Fig. 2 is a front view of the vibration propagation suppressing structure in which the speaker for a vehicle is attached to the wall panel of the vehicle door. Fig. 3 is a sectional view of a speaker attaching structure.

The vibration propagation suppressing structure 10 shown in Fig. 2 is designed to suppress the propagation of the vibration generated from the speaker 20 fora vehicle which is a vibration generating source toward an entire attaching plate (wall panel within the vehicle) 12 of a vehicle door 11 with a speaker 20 attached and other members provided in a passenger room.

The speaker 20 attached to the vehicle door 11 as shown in Fig. 2 is fit in a hole (reference numeral 13 denotes an edge of the hole) formed beforehand in the attaching plate 12 which is the wall panel of the vehicle door 11 within the vehicle with no gap between itself and the attaching plate 12, as shown in Fig. 3. A frame 22, which elastically supports the vibrating plate 21 of the speaker 20 through an edge or damper and made of e.g. metal to provide relatively high rigidity, is secured to the attaching plate 12 by a bolt/nut 14. In this way, since the speaker 20 is attached to the attaching pate 12 with no gap, there is a little leakage of the sound which is radiated to the rear of the speaker (sound having an opposite phase to the reproduced sound), thereby decreasing the influence on the sound quality (particularly, attenuation in bass sound).

Further, as seen from Fig. 2, around the speaker 20 attached to the attaching plate 12, a cutout portion (a slit portion) 30 is formed so as to surround partially the speaker 20 and along the periphery thereof. The cutout portion 30 is formed in the vicinity (at a position apart by a distance such in a range from 2 cm to 5 cm from the edge of the speaker 20) of the speaker 20. Incidentally, in this embodiment, the cutout portion 30 partially surrounds the speaker 20. However, the cutout portion 30 may be formed to surround entirely the speaker 20.

The cutout portion 30 can have various shapes as described later. The various shapes are preferably substantially arc-shaped to be substantially concentric circles around the speaker 20. For example, where the diameter of the speaker 20 is 16 cm, the diameter of the concentric circles in which the cutout portion is arranged is preferably be in a range from 18 cm to 21 cm.

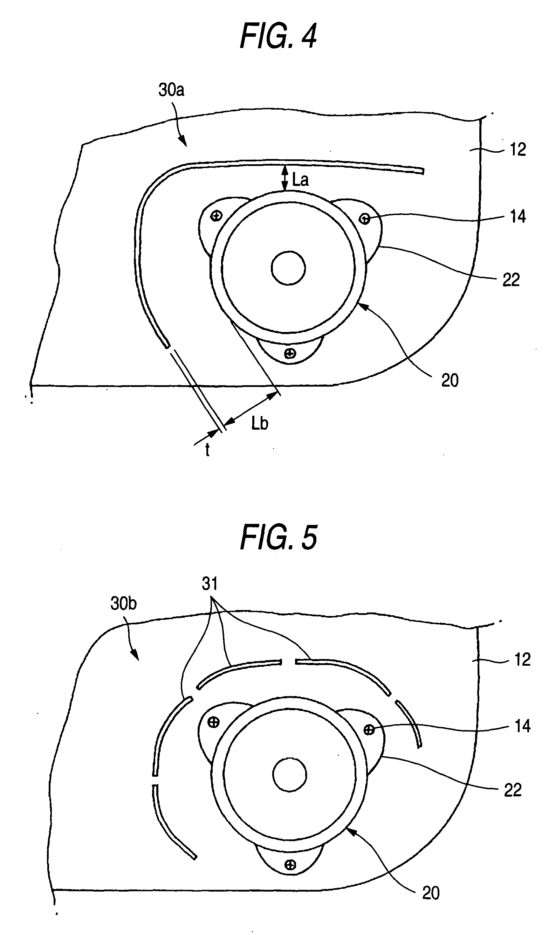

Figs. 4 to 7 shows various shapes of the cutout portion 30. In the first shape shown in Fig. 4, a cutout portion 30a is substantially arc-shaped along the periphery of the speaker 20. This shape can interfere with the vibration propagation path from the speaker 20 with no gap.

In the second shape shown in Fig. 5, a cutout portion 30b composed of a plurality of holes 31 intermittently arranged along the periphery of the speaker 20 is formed as a single arc. This shape, in which the attaching plate 12 is integral between adjacent holes, can prevent the strength of the attaching plate 12 from being attenuated.

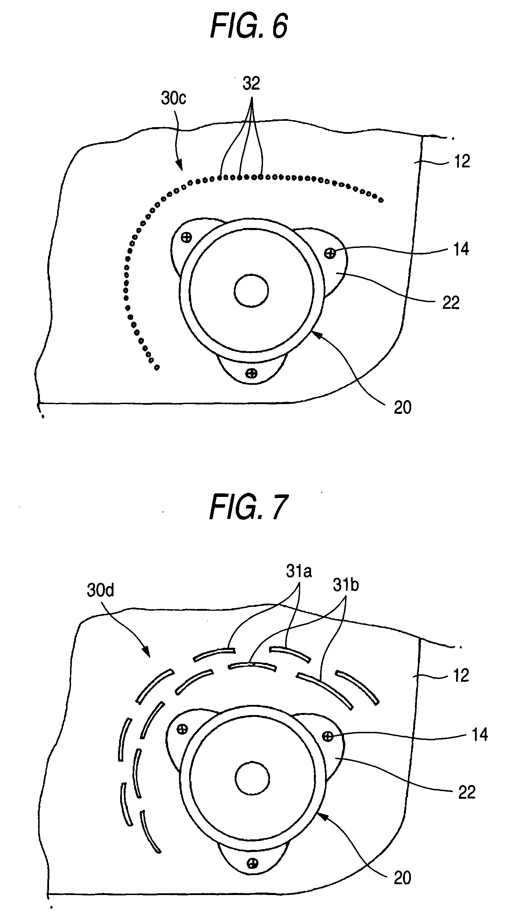

In the third shape shown in Fig. 6, a cutout portion 30c composed of a large number of round holes 32 intermittently arranged along the periphery of the speaker 20 is formed as a single arc. Since the cutout portion 30c can be formed using a jig for making the round holes, the attaching plate 12 can be machined relatively easily.

The fourth shape shown in Fig. 7 has a first cutout portion 30d composed of a plurality of holes 31a arranged intermittently along the periphery of the speaker 20 and a second cutout portion 30e composed of a plurality of holes 31b intermittently arranged each of which blocks a vibration propagation path passing the adjacent first holes arranged intermittently. In this shape, the cutout portion is multiply formed (In Fig. 7, the cutout portion is doubly as the first cutout portion 30d and the second cutout portion 30e) so that the vibration propagation paths passing the adjacent holes are blocked). Therefore, no linear vibration propagation path is formed from the speaker 20. This improves the effect of suppressing the vibration propagation.

Each of the cutout portions 30a to 30e preferably has a width t (Fig. 4) such in a range from 0.5 mm to 5 mm.

Further, the cutout portions 30a to 30e are each preferably filled with a sealant and filler (viscoelastic material such as butyl rubber) in order to enhance the waterproof so as to preventing water from invading the inside of the door 11.

The sound which leaks through cutout portions 30a to 30e from the inside of the attaching plate 12, which has an opposite phase to that of the sound radiated from the front of the speaker 20, influences the sound quality (particularly, bass sound attenuates). In order to avoid such inconvenience, the cutout portion is preferably filled with the filler as described above, thereby enhancing sound proofing.

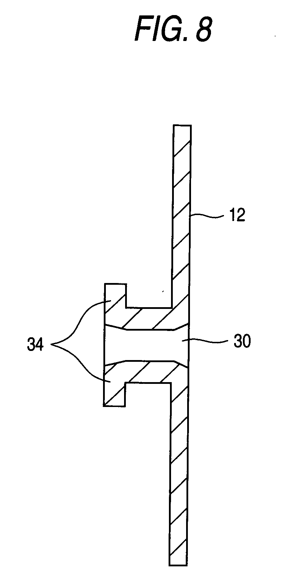

Further, as seen from Fig. 8, a fold-back portion 34 folded to the rearside may be given at the edge of the cutout portion 30. This can prevent the strength of the attaching plate 12 from decreasing owing to the provision of the cutout portion 30.

In the embodiment, since the speaker 20 is provided at the lower corner of the door 11, the cutout portion 30 is formed along only a part of the entire periphery of the speaker 20. However, for example, where the speaker 20 is centrally located on the door 11, the cutout portion 30 may be formed along the entire periphery of the speaker 20.

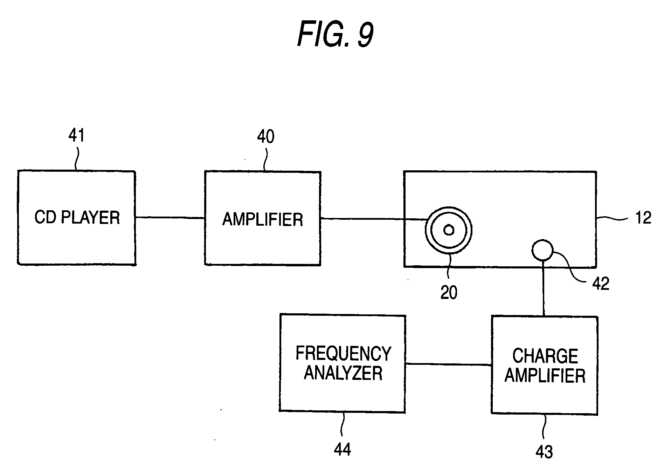

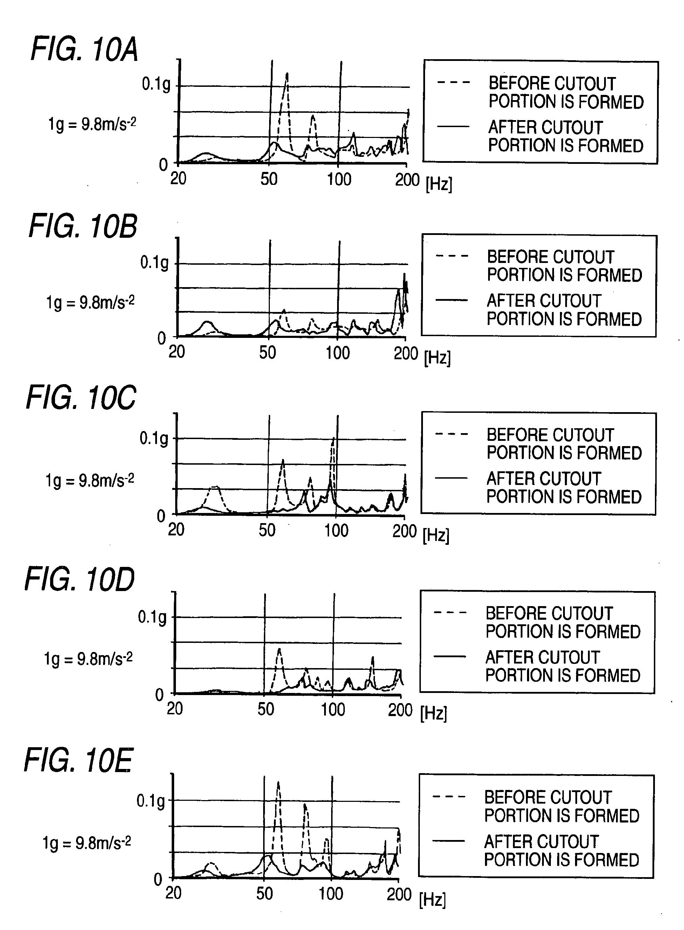

Now referring to Fig. 10, an explanation will be given of the measurement result of the vibration at various portions of the door 11 which has been measured using the apparatus as shown in Fig. 9 for an example of the vibration propagation suppressing structure 10 according to the embodiment as shown in Fig. 2.

First, the method for measuring vibration will be explained. As seen from Fig. 9, a CD player 41 is connected, through an amplifier 40, to the speaker 20 attached to the attaching plate 12 of the door 11 as shown in Fig. 2, thereby generating white noise at 4W.

The vibration on the attaching plate 12 is detected at various positions of the attaching plate 12 (points 1 to 5 in Fig. 2) using vibration pick-ups 42 located there. The vibration is amplified by a charge amplifier 43, and supplied to a frequency analyzer 44 for measuring the vibration.

In the embodiment, the attaching plate 12 employed for vibration measurement had the cutout portion 30a formed in the shape as shown in Fig. 4. The cutout portion 30a is filled with the filler of butyl rubber. The diameter of the speaker 20 is 16 cm, the width t of the cutout portion 30a is 2 mm, and the edge distance between the cutout portion 30a and the speaker 20 is 2 cm at the nearest portion La and 5 cm at the farthest portion Lb.

As the white noise generated from the speaker 20, that at the frequency band (20 Hz - 200 Hz) in which an unusual sound such as chattering or hitting sound is likely to be generated was employed to measure the vibration characteristic in each frequency.

The measurement was made for the attaching plate 12 (before machining) before the cutout portion 30a is formed and that (after machining) after the cutout portion 30a is formed, thereby verifying the effect of the provision of the cutout portion 30a. The measurement results are shown in Figs. 10A through 10E.

In each of the measurement results as shown in Figs. 10A-10E, the measurement result before machining of making the cutout portion 30a is indicated by broken lines whereas the measurement result after machining of making the cutout portion 30a is indicated by solid lines.

Figs. 10A and 10B show the measurement results at points 1 and 2, respectively. Both points are located inside the cutout portion 30a (on the side near to the speaker).

Figs. 10C, 10D and 10E show the measurement results at points 3, 4 and 5, respectively. All the points are located outside the cutout portion 30a.

As a result of the measurement, as seen from Figs. 10C through 10E, at points 3, 4 and 5 outside the cutout portion 30a (on the side farther from the speaker 20), before machining, there are some regions (e.g. vicinities of 30 Hz, 60 Hz and 75 Hz) where the vibration increases abruptly within a narrow bandwidth.

As a measurement result in the band where the vibration increases abruptly, the vibration was reduced by 0.12 g (1g = 9.8 m/s⁻²) after machining of making the cutout portion compared with before machining. This shows that the vibration was reduced in the frequency band (20 Hz - 200 Hz) in which the unusual sound such as chattering or hitting sound is likely to be generated.

At points 1 and 2 inside the cutout portion 30a (on the side near to the speaker 20), owing to the reduction in the strength of the attaching plate 12 due to the provision of the cutout portion 30a, there are some bands in which the vibration is larger after machining than before machining (Figs. 10A and 10B).

However, the area having the edge distance from the speaker 20 that is as short as 2 cm to 5 cm is much smaller than the area outside the cutout portion 30a (on the side farther from the speaker 20). In addition, in this area, the members such as a doorknob and a window opening/closing motor are not provided. For these reasons, there is little possibility of generating the unusual sound or distorted sound due to the vibration.

The reduction in the strength of the attaching plate 12 is avoided by the filler with which the cutout portion 30a is filled. The strength reduction is not problematic.

Further, by folding the edge of the cutout portion 30a to the rearside to form the fold-back portion 34, the strength of the attaching plate 12 can be further increased (Fig. 8).

As apparent from the description hitherto made, in accordance with the vibration propagation suppressing structure 10, the vibration generated from the speaker 20 which is a vibration generating source is prevented from propagating to the member such as a doorknob, a window opening/closing motor and an inner decorating panel through the attaching plate 12 of the door 11. As a result, the vibration propagation suppressing structure can prevent occurrence of the unusual sound such as chattering or the hitting sound and the distorted sound due to the vibration of the attaching plate, thereby improving the sound quality, and solving the problem of giving uncomfortableness to a passenger in the vehicle.

Further, by filling the cutout portion 30 with a filler, the sound in an opposite phase leaked from the cutout portion 30 is reduced, thereby improving the sound quality (particularly, the bass sound is generated satisfactorily). The filler also prevents water from invading the inside of the door 11.

Further, the fold-back portion which is made by folding the edge of the cutout portion 30 to the rearside prevents reduction in the strength of the attaching plate due to the provision of the cutout portion 30.

Further, division of the cutout portion 30 into a plurality of portions prevents the reduction in the strength.

Since the cutout portion 30 is formed concentrically around the speaker 20, it can be easily machined.

Incidentally, the vibration propagation suppressing structure 10 according to this invention should not be limited to the embodiments described above, but can be modified or improved as required.

For example, in each of the embodiments described above, the cutout portion 30 was formed as a single or double plies, but may be formed as three or more plies. Further, the holes 31 which constitute the cutout portion 30 may be formed in various shapes including round, square, arc and linear shapes.

Although the present invention has been shown and described with reference to a specific preferred embodiment, various changes and modifications will be apparent to those skilled in the art from the teachings herein. Such changes and modifications as are obvious are deemed to come within the spirit, scope and contemplation of the invention as defined in the appended claims.

## Claims

1. A vibration propagation suppressing structure comprising:
an attaching plate; and
a vibration generating source attached to the attaching plate,
wherein the attaching plate comprises a cutout portion formed in a vicinity of the vibration source.

2. The vibration propagation suppressing structure as claimed in claim 1, wherein the vibration generating source is attached to he attaching plate with no gap therebetween.

3. The vibration propagation suppressing structure as claimed in claimed 1, wherein the cutout portion is formed to surround at least partially the vibration generating source.

4. The vibration propagation suppressing structure as claimed in claim 1, wherein the cutout portion is filled with a filler.

5. The vibration propagation suppressing structure as claimed in claim 1, wherein the cutout portion is formed in a substantially arc shape.

6. The vibration propagation suppressing structure as claimed in claim 1, wherein the cutout portion comprises a plurality of holes arranged intermittently.

7. The vibration propagation suppressing structure as claimed in claim 6, wherein the cutout portion comprises:
a first cutout portion comprises a plurality of holes arranged intermittently; and
a second cutout portion arranged on a vibration propagation path of a vibration propagates between the holes of the first cutout portion.

8. The vibration propagation suppressing structure as claimed in claim 6, wherein the holes of the first cutout portion comprises a hole formed in a round shape.

9. The vibration propagation suppressing structure as claimed in claim 1, wherein the cutout portion comprises a fold-back portion in which the edge of the attaching plate is folded back to a rearside thereof.

10. The vibration propagation suppressing structure as claimed in claim 1, wherein the vibration source comprises a speaker configured to output a sound.

11. The vibration propagation suppressing structure as claimed in claim 1, wherein the attaching plate comprises a panel provided on a door of a vehicle.
